# FASCICULE DE BREVET EUROPEEN

(11) **EP 1 281 018 B1**
(45) Date de publication et mention de la délivrance du brevet: **15.06.2005**
(21) Numéro de dépôt: 01931778.3
(22) Date de dépôt: 03.05.2001
(51) Int. Cl.: F16L 37/084

(54) **DISPOSITIF DE RACCORDEMENT D'UN EMBOUT A UN ORGANE**
VORRICHTUNG ZUM ANSCHLUSS EINES STUTZENS AN EIN ELEMENT
DEVICE FOR CONNECTING AN END PIECE TO AN ELEMENT

(30) Priorité: 10.05.2000 FR 0005919
(43) Date de publication de la demande: 05.02.2003
(73) Titulaire: LEGRIS SA, 35000 Rennes (FR)
(72) Inventeur: LE CLINCHE, Pascal, F-69008 Lyon (FR)
(74) Mandataire: Lavialle, Bruno
(86) Numéro de dépôt international: PCT/FR2001/001346
(87) Numéro de publication internationale: WO 2001/086189

(56) Documents cités:
- GB-A- 2 217 417
- US-A- 2 727 759
- US-A- 4 913 467
- US-A- 5 378 025
- US-A- 5 415 825

## Description

La présente invention concerne un dispositif de raccordement utilisable notamment dans les circuits de transport de fluides sous pression pour le raccord rapide de deux éléments du circuit tels qu'une conduite et un organe émetteur ou receveur de fluide ou tels que deux conduites.

On connaît des coupleurs à billes qui comprennent un embout tubulaire mâle présentant un redan annulaire externe et un embout tubulaire femelle pour recevoir l'embout tubulaire mâle, les embouts étant destinés à être associés chacun à un élément du circuit. Le maintien de l'embout mâle dans l'embout femelle est assuré par l'intermédiaire des billes qui sont appliquées en butée derrière le redan annulaire par des moyens de verrouillage.

Les moyens de verrouillage comprennent généralement une cage de maintien des billes montée par une extrémité sur l'embout femelle pour se prolonger au-delà de celui-ci et une bague montée sur la cage de maintien pour être mobile axialement entre des première et seconde positions. La bague comprend des surfaces internes de came agencées de telle façon que, lorsque la bague est dans sa première position, les billes sont maintenues en saillie à l'intérieur de la cage de maintien pour retenir le redan annulaire de l'embout mâle et, lorsque la bague est dans sa seconde position, les billes sont libérées radialement et peuvent être amenées dans une position escamotée par rapport à leur position en saillie en coopérant avec le redan annulaire pour permettre le dégagement du redan annulaire et le retrait de l'embout mâle.

De tels coupleurs à billes sont largement utilisés dans l'industrie en raison de la rapidité de raccordement qu'ils permettent. Cependant, ces coupleurs ont une structure complexe faisant intervenir un grand nombre de pièces. Il en résulte, outre une masse importante, que l'assemblage des différents constituants du coupleur est long et que la fabrication de celui-ci est relativement onéreuse d'une manière générale.

Par ailleurs, il existe sur le marché plusieurs types de ces coupleurs différant les uns des autres par exemple par la longueur de l'embout mâle ou par la forme du redan annulaire. Ainsi, dans certains cas, comme pour la maintenance de circuits existants, il est nécessaire de disposer de coupleurs d'autant de types que ceux installés sur les circuits. Compte tenu du prix de ces coupleurs, ceci conduit à des coûts relativement élevés de maintenance, de stockage et de gestion de stocks.

Le document US 4 913 467 montre une partie femelle d'un raccord destiné à recevoir un embout muni d'un redan. La partie femelle est munie de moyens de butée avant et arrière du redan de l'embout, les moyens de butée arrière étant verrouillables par un anneau extérieur coulissant sur la partie femelle.

Il serait donc intéressant de disposer d'un dispositif de raccordement de structure simple et de fabrication aisée et peu coûteuse.

A cet effet, on prévoit, selon l'invention, un dispositif de raccordement d'un embout à un organe, le dispositif de raccordement comprenant une partie femelle de réception de l'embout, une douille montée pour coulisser dans la partie femelle et possédant une extrémité en saillie de la partie femelle qui est pourvue extérieurement d'au moins un moyen de blocage coopérant avec la partie femelle pour bloquer la douille entre une position enfoncée de verrouillage et une position en retrait de déverrouillage et une extrémité opposée pourvue de moyens de butée avant d'un redan annulaire de l'embout qui sont rigidement en saillie vers l'intérieur de la douille et de moyens de butée arrière du redan tels que, lorsque la douille est dans sa position de déverrouillage, les moyens de butée arrière sont en regard d'un premier chambrage de la partie femelle pour être déplaçables par le redan annulaire entre une position en saillie vers l'intérieur de la douille et une position escamotée et, lorsque la douille est dans sa position de verrouillage, les moyens de butée arrière sont reçus dans un second chambrage de la partie femelle dont une paroi maintient les moyens de butée arrière dans leur position en saillie.

Le dispositif de raccordement a de la sorte une structure simple faisant intervenir un nombre de pièces réduit tout en permettant un raccordement ayant une efficacité analogue à celle des coupleurs à billes notamment.

Selon un mode de réalisation préféré :
- les moyens de butée arrière comprennent au moins une patte déformable ayant une extrémité solidaire de la douille et une extrémité opposée pourvue d'un talon en saillie formant butée, la patte étant déformable entre un état de repos dans lequel le talon est en saillie à l'intérieur de la douille et un état déformé dans lequel le talon est escamoté,
- les moyens de butée avant comprennent au moins une patte rigide ayant une extrémité solidaire de la douille et une extrémité opposée pourvue d'un épaulement en saillie à l'intérieur de la douille pour constituer une butée pour le redan annulaire de l'embout,
- les moyens de blocage comprennent au moins une patte d'accrochage élastiquement déformable ayant une extrémité solidaire de la douille et une extrémité opposée pourvue d'une saillie et la partie femelle a une surface externe qui présente au moins deux renfoncements axialement successifs pour recevoir ladite saillie.

Ainsi, il est possible de réaliser en une seule pièce la douille, les moyens de butée avant et arrière et les moyens de blocage.

Avantageusement, la douille est montée de manière amovible sur la partie femelle.

Ainsi, il est possible de réaliser des dispositifs de raccordement ayant une partie femelle adaptée pour recevoir plusieurs types d'embouts mâles et de prévoir des douilles interchangeables adaptées chacune à un type d'embout mâle. Des adaptateurs peu onéreux peuvent de la sorte être réalisés pour relier deux éléments d'un circuit correspondant à deux types différents de dispositifs de raccordement.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- les figures 1, 2, 3 et 4 sont des vues schématiques partielles en coupe longitudinale d'un dispositif de raccordement conforme à l'invention illustrant différentes phases de raccordement de l'embout dans la partie femelle du dispositif,
- les figures 5 et 6 sont des vues analogues aux vues précédentes, montrant un dispositif de raccordement pourvu d'organes de déconnexion de deux types.

La présente invention va maintenant être décrite en référence aux figures dans une application particulière à un adaptateur généralement désigné en 1 permettant de raccorder un embout tubulaire mâle portant la référence générale 2 et correspondant à un premier type d'accouplement et une partie femelle non représentée correspondant à un deuxième type d'accouplement.

L'embout mâle 2 est de forme tubulaire et comprend une portion d'extrémité libre 3 pourvue extérieurement d'un redan annulaire 4 délimité latéralement par des surfaces avant et arrière 5, 6 de forme tronconique. Les qualificatifs avant et arrière sont utilisés par référence au sens d'introduction de l'embout mâle 2 dans la partie femelle 7.

L'adaptateur 1 comprend une partie femelle généralement désignée en 7 qui est agencée pour recevoir l'embout mâle 2 et qui sera décrite plus en détail par la suite et une partie mâle 8 tubulaire comportant ici une portion d'extrémité libre 9 pourvue extérieurement d'un redan annulaire 10 qui sont agencés pour être reçus dans la partie femelle du deuxième type non représenté aux figures.

On peut voir sur les figures que l'embout mâle 2 du premier type et la partie mâle 8 du deuxième type diffèrent l'une de l'autre notamment par la longueur de leur portion d'extrémité 3, 9 et par la forme de leur redan annulaire 4, 10. Ces différences rendent incompatibles un embout mâle du premier type et une partie femelle du deuxième type et inversement, de sorte que leur raccordement nécessite l'interposition de l'adaptateur 1.

La partie femelle 7 comprend trois chambrages cylindriques successifs référencés 11, 12, 13 et de diamètre croissant depuis la partie mâle 8 jusqu'à l'extrémité libre de la partie femelle 7.

Le chambrage 11 adjacent à la partie mâle 8 a un diamètre sensiblement égal au diamètre externe de la portion d'extrémité 3 de l'embout 2.

Un joint d'étanchéité 14 est reçu dans le chambrage 12 contre le fond 15 de celui-ci. Le joint d'étanchéité 14 est de forme torique et a un diamètre interne légèrement inférieur au diamètre externe de la portion d'extrémité 3 de l'embout 2.

Le dispositif de raccordement conforme à l'invention comprend en outre une douille 16 comportant deux extrémités opposées 17, 18. La douille 16 a un diamètre externe légèrement inférieur au diamètre du chambrage 13 et un diamètre interne légèrement supérieur au diamètre externe du redan annulaire 4 et d'une portion de guidage 19 de l'embout 2 qui est disposée du côté de la surface arrière 6 du redan annulaire 4.

La douille 16 comprend des moyens de butée avant et des moyens de butée arrière qui sont solidaires de l'extrémité 17.

Les moyens de butée avant comprennent des pattes rigides 20 qui prolongent axialement la douille 16 et sont régulièrement espacées les unes des autres (par exemple trois pattes rigides à 120° ou quatre pattes rigides à 90° les unes des autres). Les pattes rigides 20 ont une extrémité solidaire de l'extrémité 17 de la douille 16 et une extrémité opposée pourvue d'un talon 21 en saillie à l'intérieur de la douille 16 qui présente un épaulement 22 ayant une surface de forme tronconique correspondant à la surface avant 5 du redan annulaire 4 de l'embout mâle 2. Les pattes rigides 20 présentent des surfaces internes s'étendant dans le prolongement de la surface interne de la douille 16, et des surfaces externes en portion de cylindre définissant un diamètre sensiblement égal au diamètre du chambrage 12. Les talons 21 définissent une section de passage de diamètre légèrement supérieur au diamètre de la portion d'extrémité 3 de l'embout mâle 2.

Les moyens de butée arrière comprennent des pattes déformables 24 parallèles aux pattes rigides 20 et intercalées entre celles-ci. Les pattes déformables 24 ont une extrémité solidaire de l'extrémité 17 de la douille 16 et une extrémité opposée libre pourvue d'un talon 25 interne ayant une surface terminale 26 de forme correspondante à la surface latérale 6 du redan annulaire 4 de l'embout mâle 2. Les pattes déformables 24 ont une longueur inférieure aux pattes rigides 20. De préférence, la différence de longueur est telle que les épaulements 22 des pattes rigides 20 et les surfaces terminales 26 des pattes déformables 24 définissent un logement annulaire dont les dimensions transversales sont sensiblement égales à celles du redan annulaire 4. Les pattes déformables 24 peuvent être amenées par déformation élastique entre un état de repos dans lequel le talon 25 est en saillie à l'intérieur de la douille 16 et un état déformé dans lequel le talon 25 est escamoté. La surface interne des pattes déformables 24 s'étend dans le prolongement de la surface interne de la douille 16 et la surface externe des pattes déformables 24 a une forme en portion de cylindre délimitant un diamètre externe sensiblement égal au diamètre du chambrage 12.

La douille 16 est montée dans le chambrage 13 de la partie femelle 7 pour coulisser entre une position enfoncée dans laquelle les extrémités libres des pattes rigides 20 et des pattes élastiquement déformables 24 sont reçues dans le chambrage 12 et une position en retrait dans laquelle seules les extrémités libres des pattes rigides 20 sont reçues dans le chambrage 12 et les pattes déformables 24 s'étendent en regard du chambrage 13. Lorsque les extrémités libres des pattes déformables 24 sont reçues dans le chambrage 12, la paroi du chambrage 12 maintient les pattes déformables 24 dans leur état de repos tandis que lorsque les pattes déformables 24 s'étendent en regard du chambrage 13, elles sont susceptibles d'être amenées de leur état de repos vers leur état déformé.

Le blocage de la douille 16 dans ces positions enfoncée et en retrait est assuré par l'intermédiaire de moyens de blocage en position de la douille.

Ces moyens comprennent des pattes d'accrochage 27 (par exemple trois pattes d'accrochage 27 à 120° ou quatre pattes d'accrochage 27 à 90°) qui sont solidaires de l'extrémité 18 de la douille 16 qui s'étend en saillie à l'extérieur de la partie femelle 7 et qui courent le long de la partie femelle 7 à l'extérieur de celle-ci. Les pattes d'accrochage 27 ont une extrémité courbée 28 reliée à l'extrémité 18 et une extrémité opposée libre pourvue d'une saillie 29 intérieure présentant une face terminale 30 tronconique concave et une face opposée radiale formant un épaulement 31 de butée.

Pour chaque patte d'accrochage 27, la partie femelle 7 est pourvue extérieurement de deux renfoncements arrière et avant 32, 33 axialement successifs présentant chacun du côté de la partie mâle 8 une surface tronconique convexe correspondant à la face terminale 30 de la patte d'accrochage 27 et formant une rampe et, du côté de l'extrémité libre de la partie femelle 7, une surface radiale destinée à coopérer avec l'épaulement 31 des pattes d'accrochage 27. Les renfoncements arrière 32 sont destinés à recevoir les saillies 29 des pattes d'accrochage 27 lorsque la douille 16 est dans sa position en retrait et les renfoncements avant 33 sont destinés à recevoir les saillies 29 des pattes d'accrochage 27 lorsque la douille 16 est dans sa position enfoncée.

En état de déconnexion, la douille 16 est dans sa position en retrait.

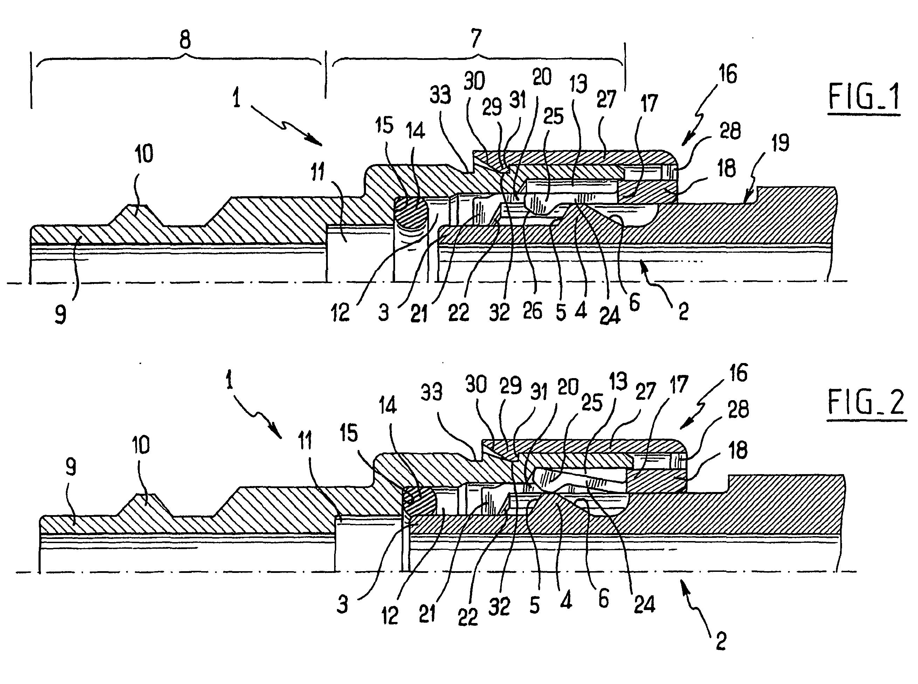

Lors de la connexion, l'embout mâle 2 est introduit dans la partie femelle 7 et dans la douille 16 (figure 1).

La surface latérale 5 du redan annulaire 4 rencontre alors les surfaces arrières (opposées aux surfaces terminales 26) des talons 25 des pattes déformables 24 et par un effet de came provoque la déformation des pattes 24 dont les extrémités libres sont amenées dans le chambrage 13 de telle sorte que les talons 25 des pattes déformables 24 sont escamotés dans ledit chambrage 13 et laissent ainsi passer le redan annulaire 4 (figure 2).

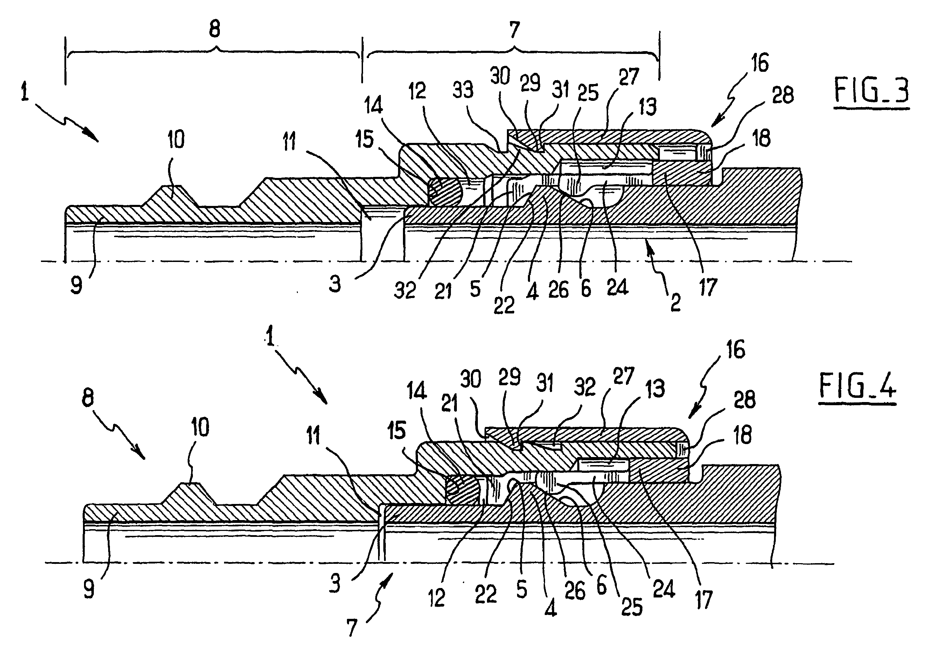

Une fois le redan annulaire 4 passé, les pattes déformables 24 reviennent de par leur élasticité propre dans leur état de repos (figure 3).

La surface 5 du redan annulaire 4 rencontre alors les épaulements 22 des pattes rigides 20 et entraînent la douille 16 vers sa position enfoncée. Le chambrage 13 est ici relié au chambrage 12 par un chanfrein pour faciliter le passage. des extrémités des pattes déformables 24 du chambrage 13 au chambrage 12 lorsque la douille 16 est amenée dans sa position enfoncée.

Simultanément, les rampes des renfoncements arrière 32 et les faces terminales 30 des pattes d'accrochage coopèrent à la manière de came provoquant le dégagement des saillies 29 hors des renfoncements arrière 32 par déformation des pattes d'accrochage.

Le mouvement d'introduction se poursuivant, la portion d'extrémité 3 de l'embout 2 est emmanchée dans le joint torique 14 et est finalement reçue dans le chambrage 11.

Le mouvement d'introduction est stoppé lorsque les extrémités courbées 28 des pattes d'accrochage 27 arrivent en butée de l'extrémité libre de la partie femelle 7. La douille 16 est alors dans sa position enfoncée et les saillies 29 des pattes d'accrochage 27 sont reçues dans les renfoncements avant 33 (figure 4).

Dans cette position, un effort d'extraction exercé sur l'embout mâle 2 provoque la mise en appui de la surface 6 du redan annulaire 4 contre les surfaces terminales 26 des pattes déformables 24. Les pattes déformables 24 étant maintenues dans leur position en saillie par la paroi du chambrage 12, elles ne peuvent se soulever et l'effort d'extraction est reporté via les pattes d'accrochage 27 aux épaulements 31 qui viennent en butée des surfaces radiales des renfoncements avant 33. Toute extraction de l'embout mâle 2 est ainsi impossible.

Pour procéder à la déconnexion de l'embout mâle 2 et de l'adaptateur 1, il faut exercer un effort de traction sur l'embout mâle 2 tout en soulevant les pattes d'accrochage 27 de manière à dégager les saillies 29 des renfoncements avant 33.

Plus rien ne s'opposant à l'effort d'extraction, l'embout mâle 2 recule et entraîne avec lui la douille 16 de par son contact avec les surfaces terminales 26 des pattes déformables 24 jusqu'à ce que la douille 16 arrive dans sa position en retrait. Les saillies 29 des pattes d'accrochage 27 sont alors reçues dans les renfoncements arrière 32 et s'opposent à tout recul de la douille 16 au-delà de cette position. Les pattes déformables 24 s'étendant alors en regard du chambrage 13, la coopération de la surface latérale 6 du redan annulaire 2 et des surfaces terminales 26 des talons 25 des pattes déformables 24 provoquent la déformation de ces pattes déformables 24 et l'escamotage des talons 25. Le retrait de l'embout longitudinal 2 peut alors se poursuivre.

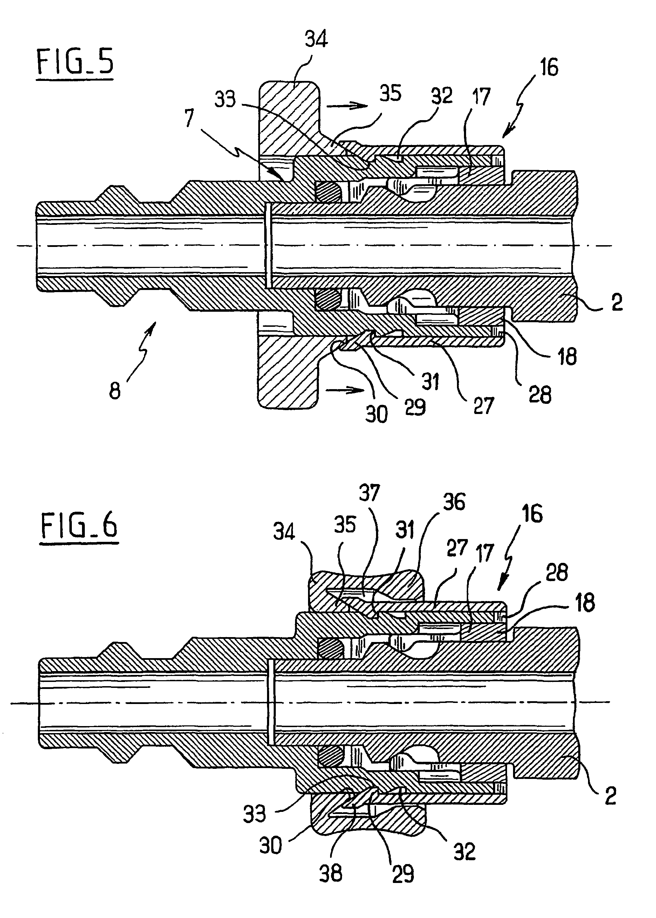

Pour faciliter le soulèvement des pattes d'accrochage 27, on peut prévoir de monter sur l'adaptateur 1 un manchon de déconnexion portant la référence 34 à la figure 5 et comportant une partie tronconique convexe formant une rampe 35 pour coopérer avec les faces terminales 30 des saillies 29 des pattes d'accrochage 27 à la manière de came de soulèvement de ces dernières.

Le manchon de déconnexion 34 est ici réalisé en une seule pièce enfilée sur la partie femelle 7 de l'adaptateur 1 après déconnexion de la partie mâle 8.

Le manchon de déconnexion peut également être fait en deux pièces libres l'une par rapport à l'autre ou articulées l'une à l'autre de manière à pouvoir disposer celui-ci sur la partie femelle 7 sans devoir extraire la partie mâle 8 de l'adaptateur 1 hors de la partie femelle dans laquelle il est introduit.

En référence à la figure 6, le manchon de déconnexion 34 comprend une portion 36 s'étendant autour de la rampe 35 et au-delà de celle-ci pour venir envelopper les extrémités libres des pattes d'accrochage 27 et coulisser sur celles-ci. La portion 36 est renflée vers l'intérieur et l'extrémité libre des pattes d'accrochage 27 présente une partie 38 renflée vers l'extérieur. Le manchon de déconnexion 34 coulisse ainsi sur la partie femelle 7 et les pattes d'accrochage 27. Ce coulissement est limité d'un côté par la rampe 35 qui vient en butée contre la surface terminale 30 des extrémités des pattes d'accrochage 27 et de l'autre côté par les parties renflées 38 des extrémités des pattes d'accrochage 27 et de la portion 36. Le manchon de déconnexion 34 est ici en une seule pièce et est monté sur la partie femelle 7 après avoir été mis en place sur les pattes d'accrochage 27 préalablement au montage de la douille 16 sur la partie femelle 7.

On remarquera que la douille 16 peut être aisément retirée de la partie femelle 7 par soulèvement des pattes d'accrochage puis être remontée par encliquetage. Il est donc possible de réaliser des jeux d'adaptateurs comprenant d'une part des parties mâles correspondant chacune à un type particulier d'accouplement et des parties femelles adaptées à recevoir plusieurs types d'embouts mâles et d'autre part des douilles interchangeables adaptées chacune à un type d'embout mâle. Il est en outre possible de prévoir que les parties mâles soient reliées aux parties femelles de manière amovible afin d'être également interchangeables.

Bien entendu, l'invention n'est pas limitée au mode de réalisation décrit et on peut y apporter des variantes de réalisation sans sortir du cadre de l'invention tel que défini par les revendications.

On peut prévoir une réduction progressive du diamètre du chambrage 12 en direction du chambrage 11 pour légèrement déformer les pattes rigides 19 vers l'intérieur de la partie femelle de manière à améliorer le maintien de l'embout mâle 2.

En outre, les extrémités libres des pattes rigides 20 peuvent comprendre un renflement extérieur destiné à coopérer avec un épaulement du chambrage 12 pour former une butée à l'enfoncement de la douille 16.

## Revendications

1. Dispositif de raccordement d'un embout à un organe, le dispositif de raccordement comprenant une partie femelle (7) de réception de l'embout, **caractérisé en ce que** le dispositif de raccordement comprend une douille (16) montée pour coulisser dans la partie femelle et possédant une extrémité (18) en saillie de la partie femelle qui est pourvue extérieurement d'au moins un moyen de blocage (27) coopérant avec la partie femelle pour bloquer la douille entre une position enfoncée de verrouillage et une position en retrait de déverrouillage et une extrémité opposée (17) pourvue de moyens de butée avant (20) d'un redan annulaire (4) de l'embout (2) qui sont rigidement en saillie vers l'intérieur de la douille et de moyens de butée arrière (24) du redan tels que, lorsque la douille est dans sa position de déverrouillage, les moyens de butée arrière sont en regard d'un premier chambrage (13) de la partie femelle pour être déplaçables par le redan annulaire entre une position en saillie vers l'intérieur de la douille et une position escamotée et, lorsque la douille est dans sa position de verrouillage, les moyens de butée arrière sont reçus dans un second chambrage (12) de la partie femelle dont une paroi maintient les moyens de butée arrière dans leur position en saillie.

2. Dispositif de raccordement selon la revendication 1, **caractérisé en ce que** les moyens de butée arrière comprennent au moins une patte déformable (24) ayant une extrémité solidaire de la douille (16) et une extrémité opposée pourvue d'un talon (25), la patte étant déformable entre un état de repos dans lequel le talon est en saillie à l'intérieur de la douille et un état déformé dans lequel le talon est escamoté.

3. Dispositif de raccordement selon la revendication 1 ou la revendication 2, **caractérisé en ce que** le talon (25) possède des faces avant et arrière (26) biseautées.

4. Dispositif de raccordement selon l'une quelconque des revendications 1 à 3, **caractérisé en ce que** les moyens de butée avant comprennent au moins une patte rigide (20) ayant une extrémité solidaire de la douille (16) et une extrémité opposée (21) pourvue d'un épaulement (22) en saillie à l'intérieur de la douille pour constituer une butée pour le redan annulaire (4) de l'embout (2).

5. Dispositif de raccordement selon l'une quelconque des revendications 1 à 4, **caractérisé en ce que** les moyens de blocage comprennent au moins une patte d'accrochage (27) élastiquement déformable ayant une extrémité solidaire de la douille (16) et une extrémité opposée pourvue d'une saillie (29) et la partie femelle (7) a une surface externe qui présente au moins deux renfoncements (32, 33) axialement successifs pour recevoir ladite saillie.

6. Dispositif de raccordement selon la revendication 5, **caractérisé en ce que** cette saillie (29) et au moins le renfoncement (32) correspondant à la position en retrait de la douille présentent des surfaces de came (30) pour amener la patte d'accrochage (27) d'un premier état dans lequel la saillie est reçue dans ce renfoncement vers un deuxième état dans lequel la saillie est dégagée dudit renfoncement lorsque la douille est amenée de sa position en retrait vers sa position enfoncée, la saillie comprenant un épaulement de butée arrière (31) destiné à coopérer avec une surface correspondante des renfoncements (32, 33) pour s'opposer à l'extraction de la douille (16).

7. Dispositif de raccordement selon la revendication 5 ou la revendication 6, **caractérisé en ce qu'**il comprend un manchon de connexion (34) qui est apte à être monté pour coulisser coaxialement sur la partie femelle (7) et possède une rampe annulaire (35) pour coopérer avec l'extrémité libre de la patte d'accrochage comme une came de soulèvement.

8. Dispositif de raccordement selon la revendication 7, **caractérisé en ce que** le manchon de déconnexion (34) est de moyens de son encliquetage sur la patte d'accrochage (27) et sur la partie femelle (7).

9. Dispositif selon l'une des revendications précédentes, **caractérisé en ce que** la douille (16) est montée de manière amovible sur la partie femelle (7).

## Patentansprüche

1. Verbinderanordnung zum Verbinden eines Ansatzes mit einem Element, umfassend einen aufnehmenden Abschnitt (7) zur Aufnahme des Ansatzes, **dadurch gekennzeichnet, dass** die Verbinderanordnung eine Buchse (16) umfasst, die verschiebbar in dem aufnehmenden Abschnitt angeordnet ist und ein den aufnehmenden Abschnitt überragendes Ende (18), das außen mit zumindest einem Blockiermittel (27) versehen ist, das mit dem aufnehmenden Abschnitt zusammenwirkt, um die Buchse zwischen einer eingerückten Verriegelungsposition und einer ausgerückten Entriegelungsposition zu blockieren, und ein davon abgewandtes Ende (17) hat, das mit vorderen Anschlagmitteln (20) zum Anschlag an einer ringförmigen Stufe (4) des Ansatzes (2), die starr ins Innere der Buchse hervorstehen, sowie mit hinteren Anschlagmitteln (24) zum Anschlag an der Stufe versehen ist, derart, dass, wenn die Buchse in ihrer Entriegelungsposition ist, die hinteren Anschlagmittel einer ersten Aussparung (13) des aufnehmenden Abschnitts gegenüberliegen, um durch die ringförmige Stufe zwischen einer ins Innere der Buchse hervorstehenden Position und einer ausgerückten Position verschiebbar zu sein, und, wenn die Buchse in ihrer Verriegelungsposition ist, die hinteren Anschlagmittel in einer zweiten Aussparung (12) des aufnehmenden Abschnitts aufgenommen sind, deren eine Wand die hinteren Anschlagmittel in ihrer hervorstehenden Position halten.

2. Verbinderanordnung nach Anspruch 1, **dadurch gekennzeichnet, dass** die hinteren Anschlagmittel zumindest eine verformbare Zunge (24) umfassen, deren eines Ende einstückig mit der Buchse (16) ausgebildet ist und deren davon abgewandtes Ende mit einer Nase (25) versehen ist, wobei die Zunge zwischen einem Ruhezustand, in dem die Nase ins Innere der Buchse hervorsteht, und einem verformten Zustand, in dem die Nase ausgerückt ist, verformbar ist.

3. Verbinderanordnung nach Anspruch 1 oder 2, **dadurch gekennzeichnet, dass** die Nase (25) eine abgeschrägte vordere und hintere Fläche (26) hat.

4. Verbinderanordnung nach einem der Ansprüche 1 bis 3, **dadurch gekennzeichnet, dass** die vorderen Anschlagmittel zumindest eine starre Zunge (20) umfassen, deren eines Ende einstückig mit der Buchse (16) ausgebildet ist und deren davon abgewandtes Ende (21) mit einer Schulter (22) versehen ist, die ins Innere der Buchse hervorsteht, um der ringförmigen Stufe (4) des Ansatzes (2) einen Anschlag zu bilden.

5. Verbinderanordnung nach einem der Ansprüche 1 bis 4, **dadurch gekennzeichnet, dass** die Blockiermittel zumindest eine Klinke (27) umfassen, die elastisch verformbar ist und deren eines Ende einstückig mit der Buchse (16) ausgebildet ist und deren davon abgewandtes Ende einen Vorsprung (29) hat, und dass der aufnehmende Abschnitt (7) eine Außenfläche hat, die zumindest zwei Vertiefungen (32, 33) hat, die in Achsrichtung aufeinanderfolgend angeordnet sind, um diesen Vorsprung aufzunehmen.

6. Verbinderanordnung nach Anspruch 5, **dadurch gekennzeichnet, dass** der Vorsprung (29) und zumindest die entsprechende Vertiefung (32) in der zurückgezogenen Position der Buchse Nockenflächen (30) haben, um die Klinke (27) von einem ersten Zustand, in dem der Vorsprung in der Vertiefung aufgenommen ist, in einen zweiten Zustand zu führen, in dem der Vorsprung aus dieser Vertiefung gelöst ist, wenn die Buchse von ihrer ausgerückten in ihre eingerückte Position gebracht wird, wobei der Vorsprung eine hintere Anschlagschulter (31) umfasst, die dazu vorgesehen ist, mit einer entsprechenden Fläche der Vertiefungen (32, 33) zusammenzuwirken, um dem Herausziehen der Buchse (16) entgegenzuwirken.

7. Verbinderanordnung nach Anspruch 5 oder 6, **dadurch gekennzeichnet, dass** diese eine Entriegelungshülse (34) umfasst, die dazu geeignet ist, derart angeordnet zu sein, dass sie koaxial auf dem aufnehmenden Abschnitt (7) verschiebbar ist, und die eine ringförmige Rampe (35) hat, die wie ein Hubnocken mit dem freien Ende der Klinke zusammenwirkt.

8. Verbinderanordnung nach Anspruch 7, **dadurch gekennzeichnet, dass** die Entriegelungshülse (34) Mittel zum Befestigen an der Klinke (27) und an dem aufnehmenden Abschnitt (7) hat.

9. Verbinderanordnung nach einem der vorhergehenden Ansprüche, **dadurch gekennzeichnet, dass** die Buchse (16) abnehmbar auf dem aufnehmenden Abschnitt (7) angeordnet ist.

## Claims

1. A coupling device for coupling an endpiece to a member, the coupling device comprising a female portion (7) for receiving the endpiece, and being **characterized in that** it comprises a bushing (16) mounted to slide in the female portion and possessing one end (18) projecting from the female portion which is provided on the outside with at least one blocking means (27) co-operating with the female portion to block the bushing either in a pushed-in, locking position or else in a pulled-back, unlocking position, and an opposite end (17) provided both with front abutment means (20) for coming into abutment with an annular bead (4) of the endpiece (2), which front abutment means project radially inwards from the bushing, and rear abutment means (24) for coming into abutment with the bead so that when the bushing is in its unlocking position, the rear abutment means are in register with a first chamber (13) of the female portion so as to be movable by the annular abutment between a position in which they project towards the inside of the bushing and a retracted position, and when the bushing is in its locking position, the rear abutment means are received in a second chamber (12) of the female portion having a wall that holds the rear abutment means in their projecting position.

2. A coupling device according to claim 1, **characterized in that** the rear abutment means comprise at least one deformable tab (24) having one end secured to the bushing (16) and an opposite end provided with a lug (25), the tab being deformable between a rest state in which the lug projects towards the inside of the bushing, and a deformed state in which the lug is retracted.

3. A coupling device according to claim 1 or claim 2, **characterized in that** the lug (25) possesses chamfered front and rear faces (26).

4. A coupling device according to any one of claims 1 to 3, **characterized in that** the front abutment means comprise at least one rigid tab (20) having one end secured to the bushing (16) and an opposite end (21) provided with a shoulder (22) projecting towards the inside of the bushing to constitute an abutment for the annular bead (4) of the endpiece (2).

5. A coupling device according to any one of claims 1 to 4, **characterized in that** the blocking means comprise at least one elastically deformable catch (27) having one end secured to the bushing (16) and an opposite end provided with a projection (29), and the female portion (7) has an outside surface presenting at least two setbacks (32, 33) in axial succession for receiving said projection.

6. A coupling device according to claim 5, **characterized in that** said projection (29) and at least the setback (32) corresponding to the bushing being in its pulled-back position present camming surfaces (30) for bringing the catch (27) from a first state in which its projection is received in the setback to a second state in which the projection is disengaged from said setback when the bushing is brought from its pulled-back position towards its pushed-in position, the projection having a rear abutment shoulder (31) for co-operating with corresponding surfaces of the setbacks (32, 33) for opposing extraction of the bushing (16).

7. A coupling device according to claim 5 or claim 6, **characterized in that** it includes a disconnection sleeve (34) which is suitable for being mounted to slide coaxially over the female portion (7) and which possesses an annular ramp (35) for co-operating with the free ends of the catch as a lifting cam.

8. A coupling device according to claim 7, **characterized in that** the disconnection sleeve (34) is provided with means for snap-fastening on the catch (27) and on the female portion (7).

9. A device according to any preceding claim, **characterized in that** the bushing (16) is removably mounted on the female portion (7).
